# EUROPEAN PATENT SPECIFICATION

(11) **EP 4 422 010 B1**
(45) Date of publication and mention of the grant of the patent: **06.05.2026**
(21) Application number: 23461633.2
(22) Date of filing: 28.07.2023
(51) Int. Cl.: H02H 7/12

(54) **METHOD AND CIRCUIT FOR SHORT-CIRCUIT PROTECTION OF DVR VOLTAGE VARIATION COMPENSATOR**
VERFAHREN UND SCHALTUNGSANORDNUNG ZUM KURZSCHLUSSSCHUTZ EINES DVR-SPANNUNGSSCHWANKUNGSKOMPENSATORS
METHODE ET CIRCUIT DE PROTECTION CONTRE LES COURTS-CIRCUITS D'UN COMPENSATEUR DE VARIATION DE TENSION DVR

(30) Priority: 23.02.2023 PL 44388123
(43) Date of publication of application: 28.08.2024
(73) Proprietor: Siec Badawcza Lukasiewicz - Instytut Elektrotechniki, 04-703 Warszawa (PL)
(72) Inventor: Sak, Tomasz, 04-133 Warszawa (PL); Mazurek, Piotr, 04-879 Warszawa (PL); Zymmer, Krzysztof, 04-174 Warszawa (PL); Pawlaczyk, Andrzej, 96-314 Kaski (PL)
(74) Representative: Czarnik, Maciej

(56) References cited:
- SOWMYASHREE N ET AL: "Review of Dynamic Voltage Restorer (DVR) Based Controlling Approaches for Grid Networks", 2022 IEEE 2ND MYSORE SUB SECTION INTERNATIONAL CONFERENCE (MYSURUCON), IEEE, 16 October 2022 (2022-10-16), pages 1 - 8, XP034246578, DOI: 10.1109/MYSURUCON55714.2022.9972425
- FARHADI-KANGARLU MOHAMMAD ET AL: "A comprehensive review of dynamic voltage restorers", INTERNATIONAL JOURNAL OF ELECTRICAL POWER & ENERGY SYSTEMS, JORDAN HILL, OXFORD, GB, vol. 92, 11 May 2017 (2017-05-11), pages 136 - 155, XP085055077, ISSN: 0142-0615, DOI: 10.1016/J.IJEPES.2017.04.013
- YUN WEI LI ET AL: "A Dual-Functional Medium Voltage Level DVR to Limit Downstream Fault Currents", IEEE TRANSACTIONS ON POWER ELECTRONICS, INSTITUTE OF ELECTRICAL AND ELECTRONICS ENGINEERS, USA, vol. 22, no. 4, 1 July 2007 (2007-07-01), pages 1330 - 1340, XP011186921, ISSN: 0885-8993, DOI: 10.1109/TPEL.2007.900589

## Description

The subject of the invention is a method and system for short-circuit protection of the DVR voltage variation compensator.

The invention is used in LV power networks equipped with DVR voltage variation compensators, minimizing fluctuations in the voltage supplied to loads.

Fluctuations in a rms value of a voltage of a power grid supplying loads can be caused by varying power demand throughout the day and connection to a low-voltage grid of a large number of distributed renewable RES energy sources with unpredictable, weather-dependent output. Power electronics DVR voltage variation compensators are being increasingly used to regulate the rms value of the grid voltage.

The DVR compensator is equipped with a booster voltage converter (AC-DC-AC), which allows smooth, bidirectional regulation of line voltage by means of an booster transformer. Its secondary winding, with a voltage that is a fraction of the value of the mains voltage, is connected in series to a power line supplying sensitive loads. The voltage adjustment range is mostly within +/- 10% of the grid voltage. Such a range of regulation makes it possible to keep the voltage value at the DVR compensator connection point close to a rated value of the grid voltage.

The power grid supplies many loads, including sensitive loads that require power continuously. Maintaining continuity of power supply to consumers, even under emergency conditions, places particularly high demands on the short-circuit protection systems of DVR voltage variation compensators. This is especially true for short circuits and long-term overloads in a distribution system and short circuits in DVR compensator converters.

The booster voltage converter of the DVR compensator cannot be protected by circuit breakers or fuses because the booster transformer, during short-circuit in a mains-supplied load, behaves like a current transformer. For this reason, the connection of the booster voltage converter to the primary winding of the booster transformer, which constitutes its load in the emergency state, cannot be interrupted. The flow of short-circuit current through the secondary winding of the booster transformer forces the appearance of a high voltage on the primary winding and a sharp increase in the voltage on the DC circuit capacitor of the booster voltage converter. This voltage increase in the DC circuit leads to the breakthrough of transistors and damage to the booster voltage converter of the DVR variation compensator. Protection of the booster voltage converter requires the development of a suitable protection, specifically for this purpose.

The superior problem is to maintain continuity of power supply to sensitive loads despite damages in the form of a short circuit in one of them or a short circuit in the DVR compensator's booster voltage converter.

In the publication "Dynamic Voltage Restorer (DVR) System for Compensation of Voltage Sags, State -of-the-Art Review" International Journal of Computational Engineering Research (ijceronline.com) Vol. 3 Issue 1 (May 2014), the protection of the DVR compensator's booster voltage converter against the effects of a long-term overload of the power grid or a short circuit in the load is described.

The protection method of the booster voltage converter, according to the disclosed study, consists in detecting a long-term overload or short circuit in a load supplied from the power grid, and then disconnecting the secondary winding of the booster transformer from the power grid on both sides, short-circuiting the resulting gap to form an alternative circuit conducting the load current.

In the DVR compensator protection system, one end of the secondary winding of the booster transformer is connected through closed contact of a switch to a distribution transformer, and the other end through the closed contact of another switch to the loads supplied by the power grid. In parallel with this winding and the switch contacts connected to this winding, an open contact of a shunt switch is connected.

The inconvenience of the above solution is that the DVR compensator is only protected against the effects of a large overload on a power grid or a short circuit in the load. Note also the cost of construction due to the need of using three apparatuses for the large currents flowing in the secondary winding of the booster transformer. Another inconvenience of this solution is duration of switching cycle of the DVR voltage variation compensator short-circuit protection contactors. This time is the sum of eigentimes of the bypass contactor of the cutoff contactors for the secondary winding of the booster transformer, plus the time to compensate for the spread of the eigentimes of these contactors. During switching cycle of the contactors, the peak voltage in DC circuit of the booster voltage converter increases, which exposes its transistors to damage. Reducing the duration of the contactors' switching cycle may cause a short-time interruption of the supplying current flow to the loads and loss of continuity of power supply to sensitive consumers.

From the publication "Protection of DVR against Short Circuit Faults at the Load Side" 2006 3rd IET International Conference on Power Electronics, Machines and Drives - PEMD 2006, the protection of a booster voltage converter against the effects of a long-term overload of the power grid or a short circuit at the load is known.

The disclosed method of protection involves detecting an overload or short circuit in the load by measuring the feedback impedance. If an overload or short circuit is detected, the polarity of the voltage injected into the power grid by the DVR compensator booster transformer is reversed. This change in polarity reduces the line voltage and lowers the value of the short-circuit or overload current. The presented method of the booster voltage converter protection uses only existing components in the DVR compensator and does not require the installation of any additional overcurrent devices or protections.

Another publication is "Review of Dynamic Voltage Restorer (DVR) Based Controlling Approaches for Grid Networks", Authors: Sowmyashree NShashikala M SVeeramanju K T.A.

Another publication is Dual-Functional Medium Voltage Level DVR to Limit Downstream Fault Currents, Authors: Yun Wei LiMahinda VilathgamuwaPoh Chiang LohBlaabjerg

The disadvantage of the described solution is the limited ability to reduce the flow of overload or short-circuit current due to the limited power of the DVR compensator.

The object of the invention is to develop a complex short-circuit protection for the DVR voltage variation compensator, operating independently of it, which will protect the DVR voltage variation compensator against damages caused by a prolonged overload or short-circuit in a load supplied from a 0.4 kV power grid and against damages caused by a short circuit in its booster voltage converter.

The invention is disclosed in the claims.

The essence of the DVR voltage variation compensator protection method, according to the invention, is that a current of a load **(Obc)** circuit comprising secondary winding of a booster transformer is measured and a current in the DC circuit of a booster voltage converter is measured and the measured values of these currents are compared with their threshold values. When at least one of these threshold values is exceeded, the primary winding of the booster transformer is short-circuited immediately and simultaneously, and the converter is disconnected from the primary winding of the booster transformer and from the power grid on both sides.

The essence of the invention is also a system comprising short-circuit protection system and a DVR voltage variation compensator with the booster transformer, according to the invention, consists in connecting sensors of the secondary winding current of the booster transformer and the current of a capacitor of a DC circuit of the booster voltage converter with separate discriminators, which outputs are connected to separate inputs of the short-circuit protection control system, while the outputs of this control system are connected to a solid-state switch and a shunt contactor, as well as to contactors that cut off the booster voltage converter from the primary winding of the booster transformer and from the 0.4 kV power grid supplying loads.

The advantage of the invention is a complex and independently operating short-circuit protection of the DVR compensator against the effects of short circuits in loads on the side of the power grid and against the effects of short circuits in the booster voltage converter, in the form of a system that immediately short-circuits the primary winding of the booster transformer and cuts it off from the primary winding of this transformer and from the 0.4k V power grid on both sides.

An additional advantage of the solution is the installation of contactors and a solid-state switch as protection on the primary winding side of the booster transformer, in which many times lower current flows than in the secondary winding of the booster transformer. This allows contactors to be used for significantly smaller load currents than if they were installed on the secondary winding side of the transformer. Thus, it is possible to significantly reduce the cost of protection and the entire DVR voltage variation compensator. Furthermore, the transfer of short-circuit protection contactors to the primary side of the booster transformer eliminates the possibility of an interruption in the flow of current through the circuit with the secondary winding of the booster transformer caused by the operation of the contactors, and ensures continuity of power supply to loads, among others sensitive loads.

The use of a solid-state switch to immediately short-circuit the primary winding of an adder transformer, when a short circuit is detected in a mains-supplied load, reduces the peak voltage level in the DC circuit of the booster voltage converter and better protects its transistors against damage.

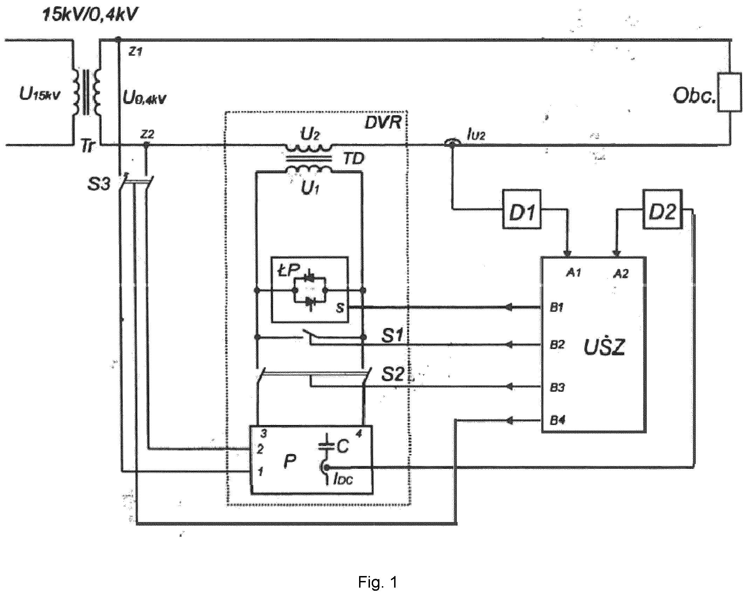

An embodiment of the invention is shown in the figure in the form of a circuit of short-circuit protection with DVR voltage variation compensator (fig. 1).

The system for short-circuit protection of the voltage variation compensator DVR, according to the invention, is equipped with a control system **USZ**, the input **A1** of which is connected via the discriminator **D1** to the current sensor I_{U2} of the booster transformer **TD** secondary winding.

The input **A2** of the control system USZ is connected via discriminator **D2** to the current sensor I_{DC} capacitor C of the circuit DC of the booster voltage converter **P of** the compensator **DVR**.

The output **B1** of the control **USZ** is connected to the control input S of the semiconductor switch **LP**. The semiconductor switch **LP** is connected in parallel with the primary winding **U1** of the booster transformer **TD** and with the contacts of the shunt contactor **S1**.

The output **B2** of the control system **USZ** is connected to the shunt contactor **S1**, whose contacts are connected in parallel with the semiconductor switch **LP** and with the primary winding **U1** of the booster transformer **TD** and with the contacts of the cutoff contactor **S2**.

The output **B3** of the control system **USZ** is connected to the cutoff contactor **S2**, the contacts of which are connected on one side to terminals **3** and **4** of the booster voltage converter **P**, and on the other side to the two ends of the primary winding **U1** of the booster transformer **TD** and to the semiconductor switch **LP** connected to it in parallel, as well as to the contacts of the shunt contactor **S1**.

The output **B4** of the control system **USZ** is connected to the cutoff contactor **S3**, the contacts of which are connected on one side to terminals **Z1** and **Z2** of the 0.4 kV power grid, and on the other side to terminals **1** and **2** of the booster voltage converter **P** of the **DVR** voltage variation compensator.

Operation of the DVR voltage variation compensator short-circuit protection is triggered by a change in the signal at the output of discriminator **D1** or **D2** or at the outputs of both discriminators **D1** and **D2** simultaneously. The discriminator **D1** detects the exceeding of the threshold value of the secondary winding **U2** current of the booster transformer **TD**, measured by the sensor **I_{U2}**. The discriminator **D2** detects the exceeding of the threshold value of the current of the capacitor C of the circuit DC of the booster voltage converter **P** measured by the sensor I_{DC}.

The signals of discriminators **D1**, **D2** actuate the control system **USZ**, which immediately produces control signals to switch on the solid-state switch **LP** and shunt contactor **S1**, and to open cut-off contactors **S2** and **S3**.

The solid-state switch **LP**, due to its very short eigentime turns on first and short-circuits the primary winding **U1** of the booster transformer **TD** blocking the build-up of voltage on it. The bypass contactor **S1** has a longer eigentime due to which it turns on after switch **LP** switching on by short-circuiting the semiconductor switch **LP** and winding **U1** of the transformer **TD**.

At the same time, the cut-off contactors **S2** and **S3** open, disconnecting the booster voltage converter P from the shorted winding **U1** of the booster transformer **TD** and from the 0.4 kV power grid.

During the operation of this short-circuit protection, there is no possibility of interruption of current flow through the secondary winding **U2** of the booster transformer **TD**, which guarantees the continuity of power supply to the remaining loads **Obc** under all conditions.

Tripping of the short-circuit protection of the faulty load **Obc** restores normal power supply conditions in the 0.4 kV power grid and automatically puts the **DVR** voltage variation compensator back into operation in the 0.4 kV power grid.

The short eigentime of switching on the semiconductor switch **LP** of the order of microseconds, allows the primary winding **U1** of the booster transformer **TD** to be short-circuited very quickly and limits the increase in the peak value of the voltage on this primary winding **U1** already at a low level, safe for the transistors of the booster voltage converter **P**.

Also, the operation of the short-circuit protection of the DVR voltage variation compensator, caused by a short circuit in the booster voltage converter **P**, does not interfere with the current flow in the secondary winding **U2** of the booster transformer **TD**, ensuring stable and continuous power supply to the loads **Obc**. In this case, the solid-state switch **LP** and the shunt contactor **S1** remain permanently closed, permanently short-circuiting the primary winding **U1** of the booster transformer **TD**.

The cut-off contactors **S2**, **S3** also remain permanently open, disconnecting the faulty booster voltage converter **P** from the 0.4 kV power grid and from the primary winding **U1** of the booster transformer **TD**. Such a state of the contactors **S1**, **S2 and S3**, as well as the semiconductor switch **LP** is maintained until the faulty booster voltage converter **P** is replaced by the service and the compensator of operating voltage changes in the 0.4 kV power grid is manually switched on.

## Claims

1. A method for short-circuit protection of a Dynamic Voltage Restorer (DVR) according to claim 2 against effects of short circuits in a load supplied from an electric 0,4kV power grid and against effects of short circuits in a booster voltage converter of the DVR voltage variation compensator, **characterized in that**
a current in a load **(Obc)** circuit comprising a secondary winding **(U2)** of a booster transformer (**TD**) is measured and a current in a DC circuit of a booster voltage converter **(P)** is measured and compared with their threshold values, and when at least one threshold value of the measured currents is exceeded, a primary winding **(U1)** of the booster transformer (**TD**) is immediately short-circuited and the booster voltage converter (**P**) is disconnected from the primary winding **(U1)** of the booster transformer (**TD**) and from the 0.4 kV power grid on both sides.

2. A system comprising a short-circuit protection system and a DVR voltage variation compensator, in which a primary winding of a booster transformer is connected in parallel with a semiconductor switch and with a shunt contactor short-circuiting it, and through contacts of a first cut-off contactor with two terminals of a booster voltage converter of the DVR voltage variation compensator, while contacts of a second cut-off contactor are connected on one side with terminals of a 0.4 kV power grid, and on the other side with the terminals of the booster voltage converter of the DVR voltage variation compensator,
**characterised in that**
an input **(A1)** of a protection control system **(USZ)** is connected via discriminator (**D1**) to a current sensor **(**I_{U2}) in the load circuit (Obc) comprising a secondary winding current **(U2)** of the booster transformer (**TD)**, an input (**A2**) of the protection control system **(USZ)** is connected via discriminator (**D2**) to a current sensor (I_{DC}) of a capacitor **(C)** of a DC circuit of a booster voltage converter **(P)** of a voltage variation compensator (**DVR**), furthermore an output **(B1)** of the protection control system **(USZ)** is connected to a control input **(S)** of a semiconductor switch **(LP)**, an output **(B2)** is connected to the shunt contactor(**S1**), an output (**B3**) is connected to the first cut-off contactor **(S2)**, and an output **(B4)** is connected to the second cut-off contactor **(S3)**.

## Patentansprüche

1. Verfahren zum Kurzschlussschutz eines Spannungsvariationskompensators (DVR) nach Anspruch 2 gegen die Auswirkungen von Kurzschlüssen in einer aus einem elektrischen 0,4-kV-Energieversorgungsnetz gespeisten Last sowie gegen die Auswirkungen von Kurzschlüssen in einem Spannungs-Booster-Umrichter des Spannungsvariationskompensators (DVR), **dadurch gekennzeichnet, dass** ein Strom in einem Lastkreis (Obc), der eine Sekundärwicklung (U2) eines Boostertransformators (TD) umfasst, gemessen wird und ein Strom in einem Gleichstromkreis eines Spannungs-Booster-Umrichters (P) gemessen und mit seinen Schwellenwerten verglichen wird, und wenn mindestens ein Schwellenwert der gemessenen Ströme überschritten wird, eine Primärwicklung (U1) des Boostertransformators (TD) unverzüglich kurzgeschlossen wird und der Spannungs-Booster-Umrichter (P) sowohl von der Primärwicklung (U1) des Boostertransformators (TD) als auch vom 0,4-kV-Energieversorgungsnetz beidseitig getrennt wird.

2. System umfassend ein Kurzschlussschutzsystem und einen DVR-Spannungsvariationskompensators, bei dem eine Primärwicklung eines Boostertransformators parallel zu einem Halbleiterschalter und zu einem diesen kurzschließenden Nebenschlusskontaktor geschaltet ist und über Kontakte eines ersten Abschaltkontaktors mit zwei Anschlüssen eines Zusatzspannungsumrichters des DVR-Spannungsschwankungskompensators verbunden ist, während Kontakte eines zweiten Abschaltkontaktors auf einer Seite mit den Anschlüssen des 0,4-kV-Energieversorgungsnetzes und auf der anderen Seite mit den Anschlüssen des Spannungs-Booster-Umrichters des DVR-Spannungsvariationskompensators verbunden sind, **dadurch gekennzeichnet, dass** ein Eingang (A1) eines Schutzsteuersystems (USZ) über einen Diskriminator (D1) mit einem Stromsensor (IU2) im Lastkreis (Obc) verbunden ist, der den Sekundärwicklungsstrom (U2) des Boostertransformators (TD) umfasst, ein Eingang (A2) des Schutzsteuersystems (USZ) über einen Diskriminator (D2) mit einem Stromsensor (IDC) eines Kondensators (C) des Gleichstromkreises eines Zusatzspannungsumrichters (P) des Spannungsvariationskompensators (DVR) verbunden ist, ferner ein Ausgang (B1) des Schutzsteuersystems (USZ) mit einem Steuereingang (S) eines Halbleiterschalters (LP) verbunden ist, ein Ausgang (B2) mit dem Nebenschlusskontaktor (S1) verbunden ist, ein Ausgang (B3) mit dem ersten Abschaltkontaktor (S2) verbunden ist und ein Ausgang (B4) mit dem zweiten Abschaltkontaktor (S3) verbunden ist.

## Revendications

1. Procédé de protection contre les courts-circuits d'un restaurateur de tension dynamique (DVR) selon la revendication 2, contre les effets des courts-circuits dans une charge alimentée par un réseau électrique du 0,4 kV et contre les effets des courts-circuits dans un convertisseur élévateur de tension du restaurateur de tension dynamique DVR, **caractérisé en ce que** l'on mesure un courant dans un circuit de charge (Obc) comprenant un enroulement secondaire (U2) d'un transformateur élévateur (TD) et l'on mesure un courant dans un circuit à courant continu d'un convertisseur élévateur de tension (P), que l'on compare à leurs valeurs seuils respectives, et que lorsqu'au moins une valeur seuil des courants mesurés est dépassée, un enroulement primaire (U1) du transformateur élévateur (TD) est immédiatement court-circuité et le convertisseur élévateur de tension (P) est déconnecté de l'enroulement primaire (U1) du transformateur élévateur (TD) ainsi que du réseau électrique 0,4 kV des deux côtés.

2. Système comprenant un système de protection contre les courts-circuits et un restaurateur de tension dynamique DVR, dans lequel un enroulement primaire d'un transformateur élévateur est connecté en parallèle avec un interrupteur semi-conducteur et avec un contacteur de dérivation de court-circuitage, et, par l'intermédiaire des contacts d'un premier contacteur de coupure, avec deux terminaux d'un convertisseur de tension élévateur du compensateur de variation de tension DVR, tandis que les contacts d'un deuxième contacteur de coupure sont reliés d'un côté aux terminaux d'un réseau électrique de 0,4 kV et, de l'autre côté, aux terminaux du convertisseur de tension élévateur du compensateur de variation de tension du DVR, **caractérisé en ce qu'**une entrée (A1) d'un système de commande de protection (USZ) est reliée, par l'intermédiaire d'un discriminateur (D1), à un capteur (IU2) du courant dans le circuit de charge (Obc) comprenant un courant d'enroulement secondaire (U2) du transformateur élévateur (TD), une entrée (A2) du système de commande de protection (USZ) est reliée, par l'intermédiaire d'un discriminateur (D2), à un capteur de courant (IDC) d'un condensateur (C) d'un circuit à courant continu d'un convertisseur de tension élévateur (P) du compensateur de variation de tension (DVR), en outre une sortie (B1) du système de commande de protection (USZ) est reliée à une entrée de commande (S) d'un interrupteur semi-conducteur (LP), une sortie (B2) est reliée au contacteur de dérivation (S1), une sortie (B3) est reliée au premier contacteur de coupure (S2) et une sortie (B4) est reliée au deuxième contacteur de coupure (S3).
